# EUROPEAN PATENT SPECIFICATION

(11) **EP 0 615 296 B1**
(45) Date of publication and mention of the grant of the patent: **28.01.1998**
(21) Application number: 94301699.8
(22) Date of filing: 10.03.1994
(51) Int. Cl.: H01M 4/48, H01M 10/40

(54) **Non-aqueous electrolyte secondary battery and method of producing the same**
Sekundäre Batterie mit nichtwässrigem Elektrolyten und Verfahren zu ihrer Herstellung
Batterie secondaire à électrolyte non aqueux et méthode de fabrication

(30) Priority: 10.03.1993 JP 49716/93; 07.04.1993 JP 80944/93; 09.04.1993 JP 83682/93; 24.12.1993 JP 328379/93; 24.01.1994 JP 6023/94
(43) Date of publication of application: 14.09.1994
(73) Proprietor: SEIKO INSTRUMENTS INC., Tokyo 136 (JP); SEIKO ELECTRONIC COMPONENTS LTD., Sendai-shi Miyagi (JP)
(72) Inventor: Iwasaki, Fumiharu, Koto-ku, Tokyo (JP); Yahagi, Seiji, Koto-ku, Tokyo (JP); Sakata, Akifumi, Koto-ku, Tokyo (JP); Ishikawa, Hideki, Seiko Elec. Components Ltd, Taihaku-ku, Sendai-shi, Miyagi (JP); Sakai, Tsugio, c/o Seiko Elec. Components Ltd, Taihaku-ku, Sendai-shi, Miyagi (JP); Tahara, Kensuke, c/o Seiko Elec. Components Ltd, Taihaku-ku, Sendai-shi, Miyagi (JP)
(74) Representative: Sturt, Clifford Mark

(56) References cited:
- EP-A- 0 484 187
- EP-A- 0 582 173
- US-A- 4 464 447

## Description

The present invention relates to non-aqueous electrolyte secondary batteries using a non-aqueous electrolyte with lithium ion conductivity wherein a material capable of incorporating and releasing lithium is used as a negative active material. In the present application the term "battery" is taken to include a single cell as well as two or more series-connected cells.

Non-aqueous electrolyte batteries using lithium as a negative active material have various advantages, namely a high reliability over long period due to a smaller amount of self-discharge in addition to a high voltage and higher energy density. Therefore they have widely been used as primary batteries of power supplies for memory backup, in cameras and the like. However in recent years, following the remarkable development of portable electronics equipment, communication equipment and so forth, various kinds of equipment have been produced which require larger current outputs from the batteries used in their power supply. It is therefore considered highly desirable from the economic viewpoint, and from the viewpoint of size reduction and weight reduction, to produce a high energy density secondary battery capable of repeated recharging and discharging. For this reason, the research and development of more satisfactory non-aqueous electrolyte secondary batteries have been considerably promoted, and such batteries are now in practical use. However their energy density, charge and discharge cycle service lives, and reliability are still unsatisfactory.

Conventionally, three battery types are known, according to the positive active material used in the positive electrode of the battery and each type has a different charge and discharge reaction, characteristic. Namely, in the first type, only lithium ions (cation) are input into and output from between layers of crystal lattice positions or gaps among the crystal lattice by means of intercalation and deintercalation reactions and the like as is the case with metal chalcogenides such as TiS₂, MoS₂, NbSe₃ and the like, and metal oxide such as MnO₂, MoO₃, V₂O₅, LiₓCoO₂, LiₓNiO₂, LiₓMn₂O₄, and the like. In the second type, essentially only the anion is stably input or output by doping or undoping reactions as the case of conductive polymers such as polyaniline, polypyrrole, polyparaphenylene and the like. In the third type, both anions and lithium cations can be input and output as in the case of layer-like structure graphite compounds and conductive polymers such as polyacene and the like (involving intercalation, deintercalation, or doping and un-doping or the like).

Uncombined metallic lithium gives the most negative electrode potential in a battery of this kind and is preferred in order to achieve the highest voltage and highest energy density. However, the problem of considerable deterioration with charge and discharge arises and results in a shorter cyclic life because of occurrence of dendrites or passivated compounds on the negative electrode due to the charge and discharge. In order to solve this problem, for the negative active material, various possible materials capable of incorporating and releasing lithium ions have been proposed; namely, (1) alloy of lithium and the other metals such as Al, Zn, Sn, Pb, Bi and Cd; (2) intercalation compounds or insertion compounds in which lithium ions are incorporated into crystal structure of inorganic compounds such as Wo₂, MoO₂, Fe₂O₃, and TiS₂, graphite, and carbonaceous materials obtained by baking organic materials; (3) conductive polymers such as polyacene, polyacetylene and the like in which lithium ions are doped.

However, in general, when such materials capable of incorporating and releasing lithium ions are used as the negative active material in a battery having a positive electrode using the positive active material described above, the operating voltage of the battery is reduced in comparison with the voltage of a battery utilising uncombined metallic lithium, because the negative active material is nobler than metallic lithium. For example, the operating voltage is lowered by 0.2 to 0.8 V when using alloys of lithium with Al, Zn, Pb, Sn, Bi, Cd or the like, and 0 to 1 V when using a lithium intercalation compound of carbon, and 0.5 to 1.5 V when using a lithium ion insertion compound such as MoO₂ or WO₂.

Since elements other than lithium are involved as negative electrode constituent elements, capacity and energy density per volume and weight are considerably reduced.

Further, when using alloys of lithium with other metals, problems occur because the utilisation-efficiency of lithium is low during charge and discharge and repeated charge and discharge causes cracks or breaking in the electrode and results in shorter cyclic life. Also in a battery using a lithium intercalation compound or insertion compound, deteriorations such as decay of the crystal structure and generation of irreversible substances arise in the case of the excess charge and excess discharge, and further there is the drawback of a lower output voltage of the battery because of the higher (nobler) electrode-potential. Batteries utilising a conductive polymer, suffer from the problem that the charge and discharge capacity, in particular per volume is reduced.

For these reasons, to obtain a secondary battery of many charge-discharge cycles and a graded charge and discharge characteristic with a high voltage and a high energy density, it is necessary to use a negative active material having a larger effective charge and discharge capacity, that is, an enhanced capability of reversibly incorporating and releasing lithium ions with a low (negative) electrode potential approaching that of lithium. The material should desirably be free from deterioration mechanisms such as decay of the crystal structure and generation of irreversible substances and the like due to incorporating or releasing of the lithium ions on charging or discharging.

The present invention provides a non-aqueous electrolyte secondary battery comprising at least a negative electrode, a positive electrode, and a non-aqueous electrolyte with lithium ion conductivity, wherein a composite oxide containing lithium of formula LiₓSi_{1-y}M_{y}O_{z} is used as an active material of said negative electrode, wherein M is one or more oxide-forming elements selected from the group consisting of:
(i) metal elements other than alkali metals,
(ii) metalloids and non-metals other than silicon, and
(iii) boron, carbon and phosphorous,
and wherein x, y and z satisfy 0 ≦ x, 0 < y < 1 and 0 < z < 2.

The secondary battery of the invention has an improved charge and discharge characteristic under high current conditions, a high voltage and a high energy density as well as a service life of many charge-discharge cycles.

In another aspect the present invention provides a method as defined in claim 10 of the accompanying claims.

To solve the problems as hereinbefore described, a composite oxide may be provided which is capable of incorporating and releasing lithium ions, and represented by a composition formula LiₓSi_{1-y}M_{y}O_{z} (where 0≦x, 0<y<1, 0<z<2 are satisfied), containing lithium (Li), composed of silicon (Si) and one or more element(s) M which are oxide-forming elements and may for example be metal(s) other than alkali metal(s), and/or metalloid(s) other than silicon. The lithium may be contained in a crystal structure or in an amorphous structure, composed of silicon and element M, and capable of incorporating/releasing lithium ions by electrochemical reaction within a non-aqueous electrolyte. Preferably the lithium in the oxide is mainly in the form of ions. However, this is not essential. The variable "x" can have any value which is compatible with stability of the oxide. Preferably 0<x≦4.

Japanese patent application numbers Hei 5-35851 (filed in 1993) and Hei 5-162958 (filed in 1993) teach that a silicon oxide containing lithium, represented by a composition formula LiₓSiO_{z} (where 0≦x, 0<z<2 are satisfied), is capable of repeatedly incorporating/releasing lithium ions in an electrochemically stable manner in a range of electrode potential of at least 0 to 3 V versus the lithium standard electrode (metal lithium) in a non-aqueous electrolyte. Due to such charge and discharge reactions a high charge and discharge capacity is provided particularly in the 0 to 1 V region.

However, when in accordance with the present invention a part of the silicon (Si) of the oxide of formula LiₓSiO_{z} is replaced with one or more oxide-forming element(s) M (e.g. metals or metalloids) other than alkali metal(s) or silicon, or the silicon is supplemented by one or more such element(s) M to produce the composite oxide of formula LiₓSi_{1-y}M_{y}O_{z}, a larger charge and discharge capacity is obtained. Furthermore the resulting negative acting material has a higher charge and discharge efficiency in the base potential region of 0 to 1 V (versus the lithium standard electrode), together with an enhanced charge and discharge characteristic with a smaller polarisation (internal resistance).

The negative electrode using as an active material the composite oxide of silicon and element(s) M containing lithium according to the present invention, is capable of repeatedly stably incorporating and releasing lithium ions in a range of electrode potential of at least 0 to 3 V relative to a metal lithium electrode in non-aqueous electrolyte. Such an electrode reaction enables it to be utilised as a negative electrode of a secondary battery, which is capable of repeatedly charging and discharging. In particular, by producing the composite oxide containing both silicon and element(s) M, advantages arise in the variation of the operation voltage and decrease of the capacity and the like (even using large currents) with smaller polarisation on charging and discharging in addition to an enhanced capability of reversibly incorporating and releasing lithium ions. A considerably large effective charge and discharge capacity and efficiency in the base potential region of 0 to 1 V relative to a standard lithium electrode (metal lithium) is obtained in comparison with that obtained by using the oxide of only silicon and lithium (LiₓSiO_{z}) or the oxide of only element M and lithium LiₓMO_{z}. Further, an extremely stable secondary battery having a long service life is obtained almost without deterioration due to generation of irreversible substances by the over-charging and over-discharging.

The reason why such superior charge and discharge characteristic is obtained, is not always clear. However, it is postulated as follows. The silicon oxide SiO_{z} has a larger capacity for incorporating and releasing lithium ions, ie. a large charge and discharge capacity, but it has lower electron conductivity because, being an insulating substance or semiconductor it has a relatively large polarisation on charging and discharging. On the other hand, it is estimated that the novel negative active material LiₓSi_{1-y}M_{y}O_{z} being the composite oxide according to the invention where silicon and element(s) M coexist, provides a large number of sites capable of incorporating lithium ions simultaneously together with a higher mobility of lithium ions and higher electron conductivity, which facilitates incorporating and releasing lithium ions.

As the element M, there can for example be used transition metals such as Ti, V, W, Mn, Fe, Co, Ni, Cu, and Nb for example, metals other than alkali metals such as Zn, Cd, Mg, Ba, Pb, Sn, and Al for example, and metalloids or non-metals other than silicon such as B, C, Ge, Sb, and P for example.

Preferably, to obtain a superior charge and discharge characteristic, M is one or more element(s) selected from the group consisting of transition metals of group 4 to group 10 and metals and metalloids of group 13 and group 14 in the Periodic Table (Inorganic Chemical Naming for Element(s) published by International Union of Pure and Applied Chemistry, IUPAC, revised in 1989). The ratio "y" of the number of M atoms versus a sum of the number of atoms of metal or metalloid M plus the number of silicon Si atoms in the composite oxide, is preferably in the range of 0 < y < 1. Particularly, depending on the identity of M, a considerably upgraded charge/discharge characteristic can be obtained when 0<y<0.75, and more preferably 0<y<0.5. The ratio "z" of the number of oxygen (O) atoms versus the sum of the number of atoms of element M plus the number of silicon (Si) atoms, is in the range of 0<z<2. Particularly enhanced charge and discharge characteristic can be obtained in the case 0<z≦1.5. Therefore these ranges are preferred, but not essential.

The composite oxide LiₓSi_{1-y}M_{y}O_{z} used as a negative active material of the battery according to the present invention can be produced by two general methods, as described below. However, it is to be understood that the invention is not limited to these preparation methods.

In the first method, silicon, said element(s) M and lithium, or silicon compound, said M element compound and a lithium compound are mixed at a predetermined mol ratio, and thereafter or while mixing the same, the product is thermally treated in a non-oxidising atmosphere such as inert atmosphere or vacuum or in an atmosphere controlled of oxygen amount so as to obtain the predetermined oxidation number with respect to silicon, element(s) M and lithium to produce the composite oxide of silicon, element(s) M and lithium. The respective compounds of silicon and element(s) M and lithium used as starting materials are preferably oxides or hydroxides of the respective elements, or salts such as carbonate or nitrate, or organic compounds and the like, which are capable of producing the oxide of each element by thermally treating the materials in non-oxidising atmosphere. One method of mixing these starting materials, other than a method of directly dry-mixing the powders of each material, is to dissolve or disperse these materials in water, alcohol or the other solvent to be mixed and reacted uniformly in such solution and thereafter to dry them. Another method is to atomise or ionise these materials by heating by electromagnetic radiation or the like and simultaneously or alternatively to vaporise and deposit the same. In addition, various other methods are available. In this way, the temperature of the thermal treatment after or while these materials are mixed, differs depending on the starting materials or the thermal treatment environment. The materials may be synthesised at a temperature equal to or more than 400°C, more preferably at a temperature equal to or more than 600°C. On the other hand, since silicon and quadrivalent silicon oxide are generated by disproportionation reactions at a temperature equal to or more than 800°C in inert atmosphere or vacuum or the like, the preferred temperature range is 600°C to 800°C.

The lithium compound eg. lithium hydroxide LiOH, a salt such as Li₂CO₃ or LiNO₃, or a hydrate thereof, elemental silicon or a silicon compound eg. silicon lower oxide SiO_{z'} (where 0<_{z'}<2) and elemental M or an M lower valence oxide MO_{z''} (where 0<_{z''}<2) can be mixed and thermally treated in a substantially oxygen-free atmosphere, eg. an inert atmosphere or a partial vacuum in order to synthesise the composite oxide. Preferably the oxygen content of the oxide product is controlled by controlling the partial oxygen pressure in the thermal treatment atmosphere.

The composite oxide of silicon and element(s) M thus obtained containing lithium can be used as a negative active material as it is or after processes such as grinding, regulating grain size or granulation or the like. Further, in accordance with the second method described below, preferably the negative active material has its lithium content increased or decreased by electrochemical reaction.

In the second method, composite oxide Si_{1-y}M_{y}O_{z} (where 0<y<1 and 0 < z< 2) of silicon and element(s) M (which does not contain lithium) is previously synthesised, and by electrochemically reacting the thus-obtained composite oxide Si_{1-y} M_{y}O_{z} with lithium or material containing lithium, lithium ions are incorporated into the composite oxide Si_{1-y}M_{y}O_{z} to produce a composite oxide LiₓSi_{1-y}M_{y}O_{z} containing lithium.

The initial composite oxide Si_{1-y}M_{y}O_{z} can be synthesised by thermal treatment as in the first method described above, (but permitting any addition of lithium or lithium compound). Specifically, after or during the mixing of the silicon or silicon compound with the element(s) M or compound(s) thereof at a predetermined mol ratio the initial composite oxide is obtained through thermal treatment in a non-oxidising atmosphere such as an inert atmosphere or vacuum or the like, or in an atmosphere where the oxygen amount is controlled to oxidise the silicon and element(s) M to a predetermined oxidation number. Each compound of silicon and element(s) M used as the starting materials, and each temperature of thermal treatment, and the like are as in the first method. Among combinations of these starting materials, when using, as a silicon supply source, elemental silicon or lower silicon oxide SiO_{z'} (where 0<_{z'}<2) and when using, as the source of element(s) M, elemental M or a lower valence M oxide MO_{z"} (where 0<_{z"}<2), then the composite oxide without lithium can be synthesised by thermal-treatment of the mixture in an inert atmosphere or (partial) vacuum where oxygen is eliminated or its partial pressure controlled. The oxygen content is controlled more easily if the partial oxygen pressure in the thermal treatment atmosphere is controlled, which also results in an enhanced charge and discharge characteristic. In particular, it is preferred to use a lower valence oxide MO_{z"} wherein 0<_{z"}<1.5, to produce a composite oxide product Si_{1-y}M_{y}O_{z} wherein 0<z≦1.5, since this leads to an enhanced charge/discharge characteristic under high current conditions, together with a smaller polarisation in addition to a larger charge and discharge capacity and a higher efficiency.

Incorporation of lithium ions into such composite oxide Si_{1-y}M_{y}O_{z} of silicon and element(s) M by electrochemical reaction, can be performed within the battery after assembling the battery or inside or outside the battery during production of the battery, as follows.

Namely, in variant (1) the composite oxide of silicon and element(s) M or a mixed agent of the same with conductive agent and binding agent and the like is formed in a predetermined shape and the material thus obtained is used as one electrode (the working electrode). Metallic lithium or, a material containing lithium is used as the other electrode (counter electrode), which electrodes are opposite each other, in contact with non-aqueous electrolyte with a lithium ion conductivity to constitute the electrochemical cell. A suitable current is then applied in a direction to allow the working electrode to conduct the cathode reaction, thereby the lithium ions are electrochemically incorporated into the composite oxide of silicon and element(s) M. The resulting working electrode is used as a negative electrode as it is, or used as negative active material in a negative electrode of the non-aqueous electrolyte secondary battery.

Variant (2) is a method in which the composite oxide of silicon and element(s) M or a mixed agent of the same with a conductive agent and a binding agent is formed into a predetermined shape, to which lithium or lithium alloy or the like is allowed to press or contact to produce a laminated electrode, which is used as a negative electrode and assembled into the non-aqueous electrolyte secondary battery, where, by contacting the laminated electrode with the electrolyte within the battery, a self-discharging local cell is formed. The lithium is thus electrochemically incorporated into the composite oxide of silicon and element(s) M.

In variant (3), a non-aqueous electrolyte secondary battery is constituted by employing a composite oxide of silicon and element(s) M as a negative active material and a material containing lithium and capable of incorporating and releasing lithium ions as a positive active material. Thus lithium ions released from the positive electrode by charging the resulting battery are incorporated into the composite oxide of silicon and element(s) M.

The resulting composite oxide LiₓSi_{1-y}M_{y}O_{z} of silicon and element(s) M containing lithium is used as a negative active material.

On the other hand, for the positive active material there can be utilised various kinds of material capable of incorporating and releasing lithium ions and/or anions, such as metal chalcogenide material eg. TiS₂, MoS₂, and NbSe₂, and a metal oxide eg. MnO₂, V₂O₅, LiₓCoO₂, LiₓNiO₂ or LiₓMn₂O₄, and a conductive polymer eg. polyanilin, polypyrrole, polyparaphenylene or polyacen or a graphite layer-like structure compound for example.

The battery of the present invention preferably utilises a positive electrode having a noble active material which has an electrode potential equal to or greater than 2 V with respect to metal lithium, such as a metal oxide or metal chalcogenide for example. More preferably the electrode potential of the (noble) active material is 3 V to 4 V, as exhibited by V₂O₅, MnO₂, LiₓCoO₂, LiₓNiO₂ or LiₓMn₂O₄ for example.

In particular, together with the negative electrode using as an active material the composite oxide LiₓSi_{1-y}M_{y}O_{z} of silicon and element(s) M containing lithium according to the invention, a positive electrode which uses as a positive active material a composite oxide having layer-like structure containing lithium represented by composition formula LiₐT_{b}L_{c}O₂, is preferably utilised wherein T represents one or more transition metal element(s), L represents one or more metalloid element(s) selected from boron B and silicon Si, and a, b and c satisfy 0<a≦1.15, 0.85<b+c≦1.3, and ≦ c respectively. This produces a long cycle life secondary battery particularly having a superior charge and discharge characteristic with a high energy density with less deterioration due to over-charge and over-discharge.

The composite oxide LiₐT_{b}L_{c}O₂ used for the positive active material of the battery of this embodiment of the invention is obtained by a synthesis process in which the lithium (Li), the transition metal T and/or element L, or oxides, hydroxides or salts (such as carbonate or nitrate) of the above element substances are mixed at a predetermined ratio and heated to a temperature of more than 600°C (preferably 700°C to 900°C) in air or an oxygen containing atmosphere. Thermal synthesis is also possible in an inert atmosphere when using the oxide of Li, T and L or other starting compounds containing oxygen as a supply source of such element(s). Although a heating period of about 4 to 50 hours is ordinarily sufficient, in order to promote the synthesis reaction and to promote its uniformity, it is preferred to repeat several times the processes of heating, cooling, grinding and mixing.

In formula LiₐT_{b}L_{c}O₂, the stoichometric amount of Li, corresponds to a value "a" of 1, available non-stoichiometric compositions encompass a range in "a" of ±15%. Also, compositions are available in which 0<a≦1.15 by electrochemical intercalation, deintercalation and the like. Co, Ni, Fe, Mn, Cr and V and the like may be preferable for the transition metal T, in particular, Co and Ni may be preferable for their superior charge and discharge characteristics. The boron and/or silicon content "c" and the transition metal T content "b" are preferably defined by 0<c and simultaneously 0.85≦b+c≦1.3 to reduce the polarisation (internal resistance) on charging and discharging. This also effects a considerable improvement in the cycle characteristic. On the other hand, the charge and discharge capacity per cycle is lowered when an excess amount of the boron and/or silicon amount "c" and is maximum on 0<c≦0.5, and thus such range may be preferable.

The electrolyte may preferably be a non-aqueous electrolyte with lithium ion conductivity such as; a non-aqueous (organic) electrolyte solution in which a lithium salt capable of dissociating into lithium ions, such as LiClO₄, LiPF₆, LiBF₄, or LiCF₃SO₃ for example is dissolved in eg. a single or mixed organic solvent such as γ-butyrolactone, propylene carbonate, ethylene carbonate, butylene carbonate, dimethyl carbonate, diethyl carbonate, methylformate, 1, 2-dimethoxyethane, tetrahydrofuran, dioxolane, or dimethylformamide for example. Also a polymeric solid electrolyte may be employed, wherein the lithium salt is a solid dissolved in a polymer such as polyethylene oxide, or a oxide, or a polyphosphasen cross-linked substance for example. Also an inorganic solid electrolyte such as Li₃N or LiI for example can be used.

The negative electrode using as an active material the composite oxide LiₓSi₁₋ _{y}M_{y}O_{z} of silicon and element(s) M when using non-aqueous electrolyte solution (organic electrolyte solution) containing ethylene carbonate (EC) as an organic solvent, has a graded charge and discharge characteristic and has the further advantage that a secondary battery using such material has a service life of many cycles. EC (having a high freezing point) preferably comprises less than 80% by volume of the entire solvent of the electrolyte solution. Because EC is a high viscosity solvent, the electrolyte solution preferably also contains an R·R' type alkyl carbonate (R and R' being the same or different alkyl groups) in order to raise the ionic conductivity and realise more stabilisation. Particularly, the ionic conductivity is raised and the viscosity is reduced when R and R' are the same or different alkyl group of formula CₙH₂ₙ₊₁ (n= 1, 2, 3, 4 or 5). Among these, dimethyl carbonate (DMC), diethyl carbonate (DEC) and methyl-ethyl-carbonate, where both R and R' in the formula (1) are methyl group(s) (n= 1) and/or ethyl group(s) (n=2), are most preferred. Since the maximum ionic conductivity is obtained at a mixture ratio of EC and R/R' type alkylcarbonate at a volume ratio of approximately 1 : 1, the most preferred mixing ratio is in the range about 3 : 1 to 1 : 3. The supporting electrolyte in the electrolyte solution may be, as described above be a salt capable of dissociating into Li+ ion in the solution without chemically reacting directly with the negative and positive electrodes. The use of the preferred salts LiPF₆ or LiClO₄ provides a particularly enhanced charge and discharge characteristic.

Embodiments of the present invention will now be described with reference to the accompanying drawings, of which:
Figure 1 is an illustrative view showing one example of a test cell used for performance evaluation of a negative active material;
Figure 2 is a graphical representation showing comparison of a charge characteristic on third cycle of a negative active material for a test cell according to the invention and the conventional cell;
Figure 3 is a graphical representation showing comparison of a discharge characteristic on third cycle of a negative active material for a test cell according to the invention and the conventional cell;
Figure 4 is a graphical representation showing comparison of a charge characteristic on third cycle of a negative active material for a test cell according to the invention and the conventional cell;
Figure 5 is a graphical representation showing comparison of a discharge characteristic on third cycle of a negative active material for a test cell according to the invention and the conventional cell;
Figure 6 is a graphical representation showing comparison of a charge characteristic on third cycle of a negative active material for a test cell according to the invention and the conventional cell;
Figure 7 is a graphical representation showing comparison of a discharge characteristic on third cycle of a negative active material for a test cell according to the invention and the conventional cell;
Figure 8 is an illustrative view showing one example of a battery embodying in the present invention; and
Figure 9 is a graphical representation showing comparison of a discharge characteristic on second cycle for a battery according to the invention and the conventional battery.

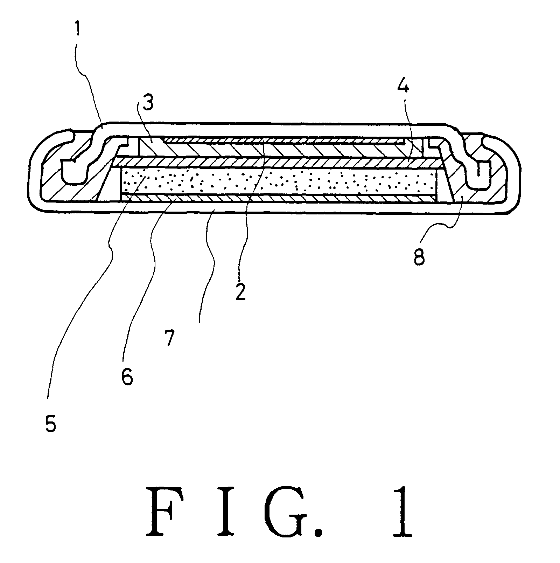

Figure 1 is a sectional view of a coin type test cell showing one example of a test cell used for evaluating a performance of a negative active material of a non-aqueous electrolyte secondary cell according to the present invention. In the drawing, numeral 1 depicts a counter electrode case simultaneously used for counter electrode terminal, where a plate made of stainless steel whose outer surface is Ni-plated is shown diminished in size. 2 depicts a counter electrode collector formed of stainless steel mesh and spot-welded to the counter electrode case 1. A counter electrode 3 is produced in that predetermined thickness of aluminum plate is punched with a diameter of 15mm to be fixed on the counter electrode collector 2 and the resultant is press-contacted thereon with lithium foil having a predetermined thickness punched into a diameter of 14mm. 7 depicts a working electrode case made of stainless steel whose one-side outer surface is Ni-plated, and which is also used as a working electrode terminal. 5 depicts a working electrode formed of active material according to the invention described later or of comparison active material by the conventional method. 6 depicts a working electrode collector made of conductive adhesive agent using carbon as conductive filler, and is electrically connected with the working electrode 5 and the working electrode case 7 each of which is adhered together. 4 depicts a separator made of porous film of polypropylene and is impregnated with electrolyte solution. 8 depicts a gasket mainly made of polypropylene, which is placed between the counter electrode case 1 and the working electrode case 7, maintaining insulation between the counter electrode and the working electrode, simultaneously sealing cell contents with the working electrode case opening edge bent and caulked inside. The electrolyte is produced in which one mol/l of lithium perchrorate LiClO₄ is dissolved into a mixture solvent of volume ratio of 1 : 1 : 2 of propylenecarbonate, ethylenecarbonate and 1,2-dimethoxyethane. The cell has an outer diameter of 20 mm with a thickness of 1.6 mm.

### (Embodiment 1)

For the active material used for the working electrode 5, is produced composite oxide of silicon shown by the composition formula Si_{1-y}M_{y}O_{z} (0<y<1, 0<z<2) whose element(s) M are tungsten W, tin Sn, lead Pb and boron B, as shown in the following. Commercially obtained tungsten dioxide (WO₂), tin monoxide (SnO), lead monoxide (PbO) or boron oxide (B₂O₃) and commercially obtained silicon monoxide (SiO) are weighed out in a ratio corresponding to a number ratio of element M atom and silicon Si atom of, I : 9 (corresponding to y = 0.1) respectively and sufficiently ground and mixed in a mortar. These four mixtures of SiO and each of four compounds are thermally treated in a nitrogen atmosphere at a temperature of 700°C in 12 hours, obtaining four kinds of composite oxides shown by formula Si_{0.9}M_{0.1}O_{z} (M = W, Sn, Pb, B). After cooling the products are ground and formed into a diameter equal to or less than 53 µm in the mortar, and used as active material of the working electrode. It is assumed that these are respectively active materials "a" (Si_{0.9}W_{0.1}O_{1.1}), "b" (Si_{0.9}Sn_{0.1}O_{1.0}), "c" (Si_{0.9}Pb_{0.1}O_{1.0}), and "d" (Si_{0.9}B_{0.1}O_{1.05}). These four kinds of active materials are added with graphite as a conductive agent, and a cross-linked type acrylic acid resin as a binding agent and the like respectively at a mixture weight ratio of 65 : 20 : 15 to produce working electrode mixture. Next, this working electrode mixture is press-molded into a pellet having a diameter of 15 mm with a thickness of 0.3 mm by 2 tonne/cm² to produce the working electrode 5. Thereafter, thus obtained working electrode 5 is adhered on the working electrode case 7 using the working electrode collector 6 made of conductive resin adhesive agent using carbon as a conductive filler, to form a unitary body, and to be vacuum-heated and dried at 200°C in 10 hours, the product is used to produce the coin type test cell described above.

Thus produced 4 kinds of test cells are aged for one week at room temperature. In this ageing, lithium-aluminum laminated electrode being the counter electrode is allowed to contact with the non-aqueous electrolyte solution within the cells to proceed alloying sufficiently, this substantially allows the entire lithium foil to become Li-Al alloy. Consequently, a cell voltage is reduced by about 0.4 V to come stable compared to using metal lithium in a simple substance as a counter electrode. Thus produced test cells are made respectively as test cells A, B, C, and D corresponding to active materials "a", "b", "c" and "d".

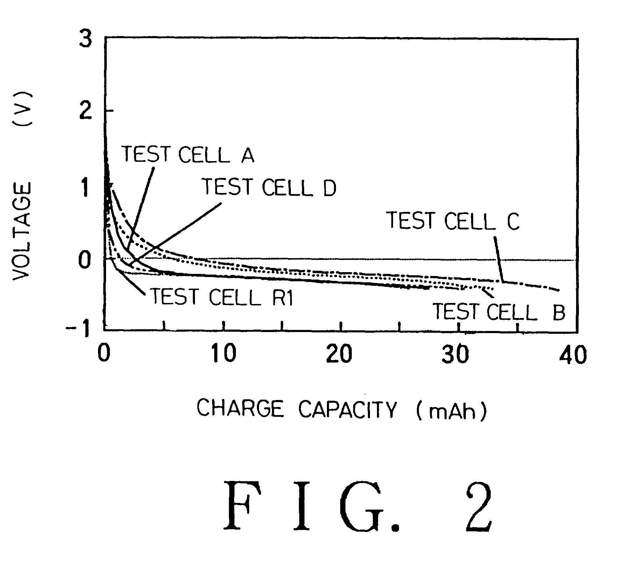

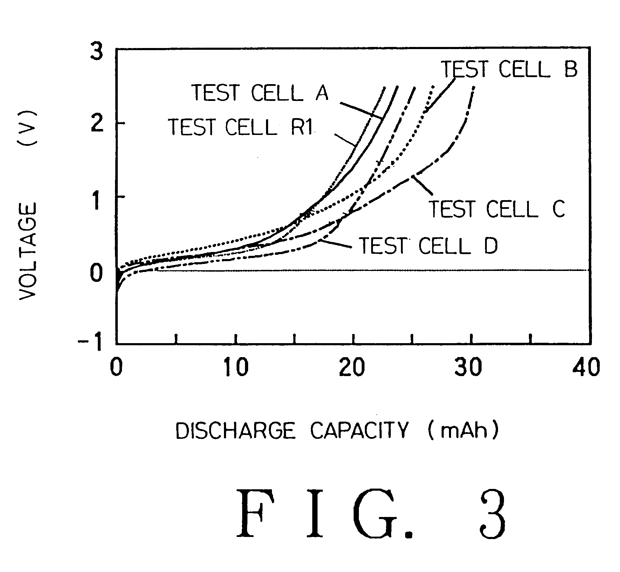

The cells A, B, C and D thus produced are tested of charge and discharge, as follows. A charging and discharging cycle test performed under the condition of a constant current of 1 mA, final voltage -0.4 V of charging (a current direction for cell reaction where lithium ions are incorporated into the working electrode from the electrolyte solution), a final voltage of 2.5 V of discharging (a current direction of cell reaction where lithium ions are released into the electrolyte solution from the working electrode). Then, a charge characteristic and discharge characteristic each on the third cycle are shown in figures 2 and 3 respectively. A rate of discharge capacity loss to charge capacity of the first cycle of the test cell B ((charge capacity - discharge capacity)/charge capacity) is shown in Table 1, where the charge and discharge cycle is started from charging.

In such charge and discharge cycle, lithium ions are released from Li - Al alloy of the counter electrode into the electrolyte solution by charging, and the lithium ions move in the electrolyte solution to electrode-react with the active material Si_{1-y}M_{y}O_{z} of the working electrode, thereby the lithium ions are electrochemically incorporated into the active material Si_{1-y}M_{y}O_{z} to produce composite oxide LiₓSi_{1-y}M_{y}O_{z} (x>o) of silicon and the element(s) M containing lithium. Next on discharge, the lithium ions are released into the electrolyte solution from the composite oxide LiₓSi_{1-y}M_{y}O_{z} to move in the electrolyte solution and to be incorporated into the counter electrode Li - Al alloy, this consequently enables a repeated stable charge and discharge. Here, the active material Si₁₋ _{y}M_{y}O_{z}, after producing LiₓSi_{1-y}M_{y}O_{z} of silicon and element(s) M containing lithium by the first charge, forms composite oxide LiₓSi_{1-y}M_{y}O_{z} of silicon and element(s) M containing lithium on thereafter discharge - charge cycle other than when completely discharged.

### (Comparison Example)

In comparison, with exception of using silicon monoxide SiO (hereinafter referred to simply as "active material r1") obtained commercially as an active material of a working electrode instead of the active materials "a" to "d" according to the invention described, the same test cell R1 as said (Embodiment 1) is produced. For this test cell R1, the same test of charge and discharge as above is performed, where a charge characteristic and a discharge characteristic each on the third cycle are shown in figures 2 and 3 respectively, a rate of discharge capacity loss for charge capacity of the first cycle is shown in Table 1.

**[Table 1]**

| Cell | a rate of discharge capacity loss for charge capacity of the first cycle |
|---|---|
| Cell B | 30.7 % |
| Cell R1 | 54.0 % |

As is apparent from figures 2 and 3, it is found that the test cells A to D using the working electrode using as an active material the composite oxide shown by formula LiₓSi_{1-y}M_{y}O_{z}(0≦x) and where silicon and element(s) M coexist, have a considerably larger charge and discharge capacity compared to the test cell R1 using oxide LiₓSiO_{z} of only silicon in y=0 as an acting material. In particular, it is found to have a considerably larger charge and discharge capacity of a base potential region of -0.4 to +0.6 V for the counter electrode being Li - Al alloy electrode (corresponding to about 0 to 1 V for metal lithium), therefore exhibits particularly upgraded property as a negative active material of the non-aqueous electrolyte secondary battery. In Table 1, it is found that, in case of using as an active material the composite oxide where silicon and element(s) M coexist, a discharge capacity loss is considerably smaller compared to the case of using the oxide SiO_{z} of only silicon as an active material. Further, not shown in the drawing, the test cell using composite oxide LiₓSi_{1-y}M_{y}O_{z} as an active material has a stable cycle characteristic with less lowering of charge and discharge capacity due to repeated charge and discharge, compared to the test cell using LiₓSiO_{z} as an active material.

### (Embodiment 2)

In the present embodiment, instead of the active materials "a" to "d" of the working electrode of the embodiment 1, the active materials synthesised as described below are used and the same entire test cells as in the embodiment 1 are produced with exception of the active material of the working electrode.

The active materials of the working electrode are produced as follows. Silicon monoxide (SiO) and manganese monoxide (MnO) each obtained commercially are weighed at a mol ratio of Si : Mn of 1 : 1, and sufficiently mixed in a mortar, thereafter the mixture is heated and burned in 12 hours at a temperature of 700°C in a nitrogen atmosphere, after cooled, it is ground and graded into a diameter equal to or less than 53 µm to produce an active material "e" having formula Si_{0.5}Mn_{0.5}O according to the invention.

In comparison, instead of the active material "e" according to the invention described, this embodiment uses the same graphite (hereinafter referred to simply as "comparison active material r4") as used for conductive agent in the embodiment 1 and uses the active material in which silicon monoxide SiO (the formerly described active material r1) and manganese monoxide (referred to simply as "comparison active material r2") each obtained in the market are ground and graded into a diameter equal to or less than 53 µm respectively and used as an active material, and with exception of the above, the same test cell (comparison test cell) as is the case of the cell in the present invention is produced.

The test cells thus produced are referred to simply as test cells E, R1, R2, and R4 corresponding to active materials "e", r1, r2, and r4 of the working electrode.

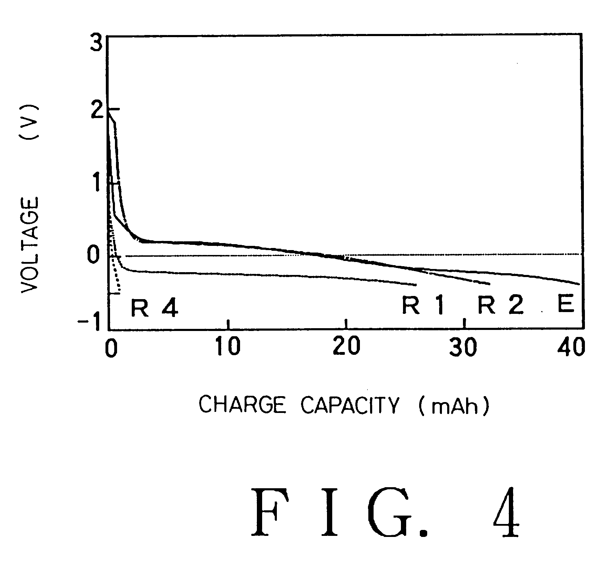

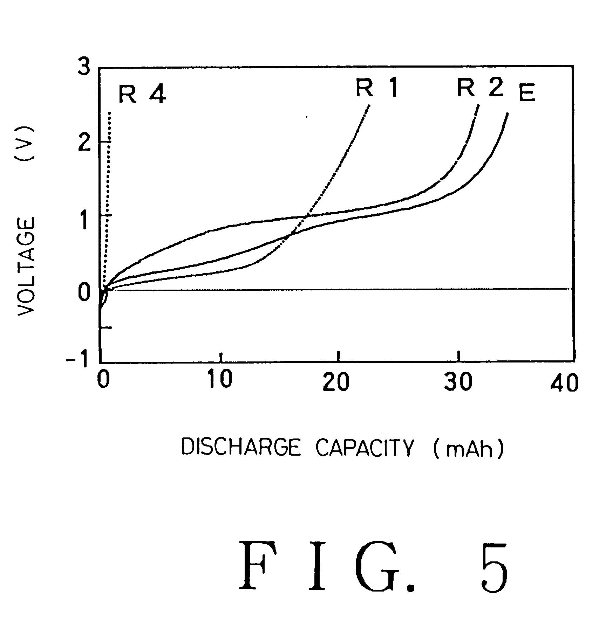

A charge characteristic and discharge characteristic each on third cycle when performing charge and discharge cycle for the test cells E, R1, R2, and R4 under the same condition as in the embodiment 1, are shown in figures 4 and 5. As is apparent from figures 4 and 5, it is found that the test cell E according to the invention has a considerably larger charge and discharge capacities with an extreme enlargement of the reversible region of charge and discharge compared to the comparison test cells R1 and R4. Further, a difference between operating voltages of charge and discharge is considerably smaller ranging entire charge and discharge region, this produces extremely smaller cell polarisation (internal resistance) to facilitate larger current charge and discharge.

It is found that the test cell R2 has the same extent of charge and discharge capacity as the test cell E, but, the operating potential of charge and discharge is high (noble). In the test cell E of this invention, the charge and discharge capacity of base potential region of less than 1.1 V (corresponding to about 1.5 V for the lithium standard electrode) is considerably higher than the test cell R2, the active material E according to the invention is found particularly superior as a negative active material.

### (Embodiment 3)

In the present embodiment, an active material synthesised as described below is used instead of the active materials "a" to "d" of the working electrode of the embodiment 1, thus, entirely the same test cell as in the embodiment 1 is produced with exception of the active material of the working electrode.

An active material of working electrode of the present embodiment is produced as follows. Silicon monoxide SiO and titanium monoxide TiO each obtained commercially are weighed for a predetermined mol ratio of Si : Ti and thereafter fully ground and mixed by an automatic mortar, thus obtained mixture is thermal-treated in 12 hours at a temperature of 700°C in a nitrogen gas atmosphere, and after cooled, it is ground and graded into a particle diameter equal to or less than 53 µm. In this way, the produced (Si_{1-y}Ti_{y}O) is used as an active material according to the present invention.

In this embodiment, three kinds of active materials of the working electrode having a mol ratio of Si : Ti are produced for comparison as follows, namely, (f1) 3 : 1 (Si_{0.75}Ti_{0.25}O), (f2) 1 : 1 (Si_{0.5}Ti_{0.5}O), and (f3) 1 : 3 (Si_{0.25}Ti_{0.75}O).

For comparison, instead of the active materials f1 to f3 according to the invention described, this embodiment uses as comparison active materials r1 and r3 the silicon monoxide SiO and titanium monoxide TiO respectively ground and graded into a particle diameter equal to or less than 53 µm the same as used in synthesis material described above. With exception of the above, the similar test cells (comparison cells) are produced in the same way as in the test cell according to the present invention described above.

Thus made up test cells are referred to simply as test cells F1, F2, F3, R1 and R3 corresponding to active materials f1, f2, f3, r1 and r3 of the working electrode respectively used.

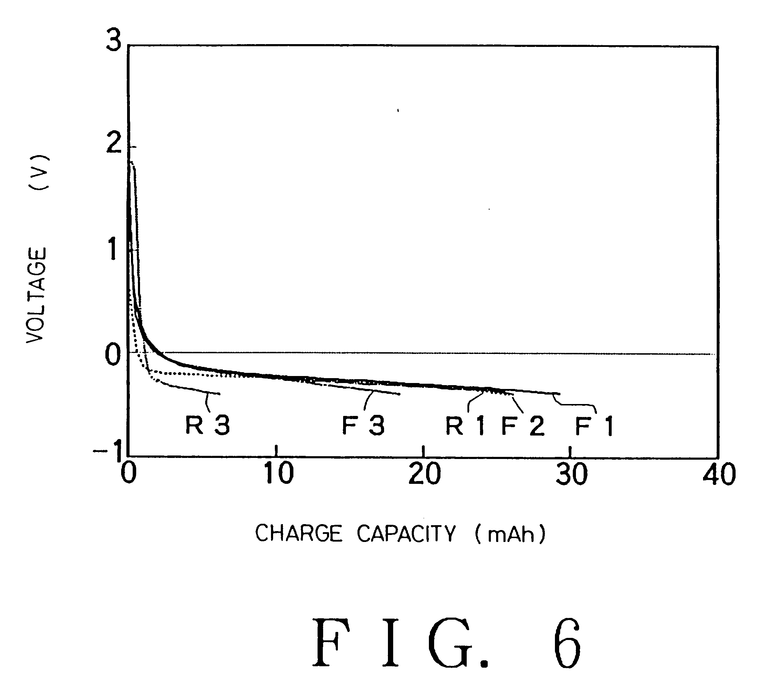

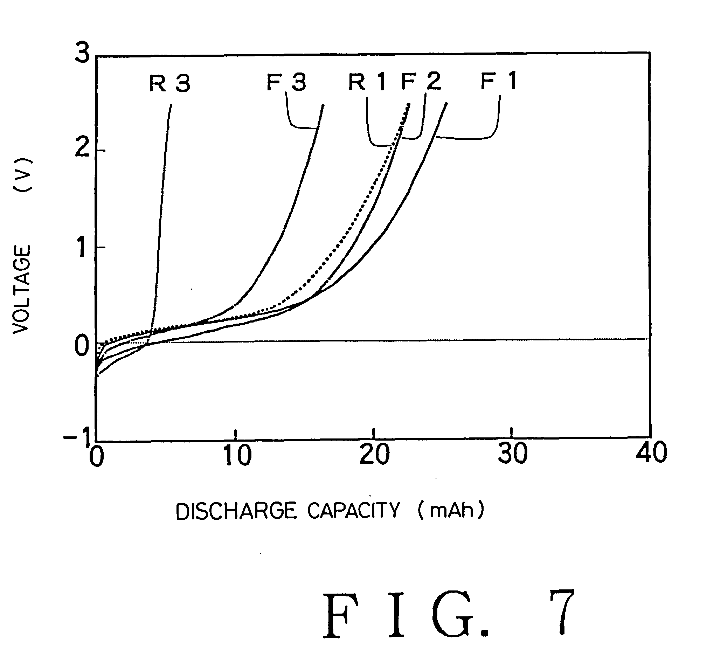

A charge characteristic and discharge characteristic each on third cycle when performing the charge and discharge cycle test for the test cells F1 to F3 and R1 to R3 under the same condition as in the embodiments 1 and 2, are shown in figures 6 and 7 respectively.

As is apparent from figures 6 and 7, it is found that the test cell F1 (titanium amount y = 0.25) and the test cell F2 (y = 0.5), which utilise working electrode using as an active material the composite oxide shown by formula LiₓSi_{1-y}Ti_{y}O_{z} and where silicon and titanium co-exist, are capable of enlarging reversible region of charge and discharge with larger charge and discharge capacity, compared to the test cells R1 and R3 using silicon oxide LiₓSiO_{z} and titanium oxide LiₓTiO_{z}. Also it is found that a difference between operating voltages of charge and discharge is considerably smaller ranging entire charge and discharge region, this considerably reduces polarisation (internal resistance) of the test cell to facilitate larger current charge and discharge. In particular, it is found that, since the charge and discharge capacity is considerably larger in a base potential region such as in -0.4 to +0.6 V for the counter electrode of Li - Al alloy electrode (corresponding to about 0 to 1 V for metal lithium), then it has a superior property as a negative active material of the non-aqueous electrolyte secondary battery. On the other hand, in a test cell A3 of titanium amount y = 0.75, a charge and discharge capacity is smaller than in the test cell R1 using silicon oxide LiₓSiO_{z}, however, it is superior as a negative active material because of its lower (base) operating voltage of discharge. A relatively smaller difference between operating voltages of charge and discharge provides a smaller polarisation, and results in an upgraded larger current charge and discharge characteristic.

As a result of these, in such composite oxide LiₓSi_{1-y}Ti_{y}O_{z} of silicon and titanium containing lithium, the charge and discharge characteristic is upgraded in case of range 0 < y < 1 as titanium amount "y" and this range may be satisfied, and preferably in 0 < y < 0.75, and more preferably the larger current charge and discharge characteristic in the case of 0 < y ≦ 0.5 is fully upgraded together with larger charge and discharge capacity, therefore, such range is particularly preferable.

This is estimated in that, in novel negative active material LiₓSi_{1-y}Ti_{y}O_{z} being the composite oxide according to the invention where silicon and titanium coexist as described above, it is facilitated to incorporate and release lithium ions because of a higher mobility of lithium ions, higher electro conductivity, and in addition large amount of sites capable of incorporating lithium ions.

### (Embodiment 4)

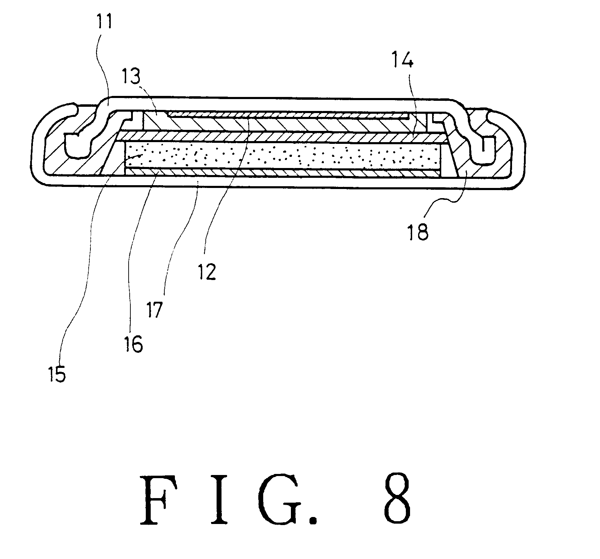

Figure 8 is a sectional view of a coin type battery showing one example of a non-aqueous electrolyte secondary battery according to the invention. In the drawing, 11 depicts a negative electrode case simultaneously used as a negative electrode terminal, where a stainless steel plate whose one-side outer surfaces is Ni-plated is shown reduced in size. Numeral 13 depicts a negative electrode formed of a negative active material according to the invention described later and adhered to a negative electrode case 11 by a negative electrode collector 12 formed of conductive adhesive agent using carbon as a conductive filler. 17 depicts a positive electrode case made of stainless steel whose one-side outer surface is Ni-plated, and the case is used simultaneously as a positive electrode terminal. 15 depicts a positive electrode formed of a positive active material according to the invention described later, and is adhered to the positive electrode case 17 by a positive electrode collector 16 made of conductive adhesive agent using carbon as conductive filler. 14 depicts a separator made of porous film of polypropylene and is impregnated with electrolyte solution. 18 depicts a gasket mainly made of polypropylene, and is placed between the negative electrode case 11 and the positive electrode case 17, maintaining electric insulation between the negative electrode and the positive electrode, and sealing cell content by allowing the positive electrode case opening edge to bed and caulk inside. The electrolyte solution is used in which 1 mol/1g lithium hexafluorophosphate LiPF₆ is dissolved in a mixed solvent of ethylene carbonate and methyl-ethyl-carbonate of volume ratio of 1 : 1. The cell has an outer diameter of 20 mm and a thickness of 1.6 mm.

The negative electrode 13 is produced as follows. The active material "a" (Si_{0.9}W_{0.1}O_{1.1}) produced in the embodiment 1 is used as a negative active material of the present embodiment according to the present invention. In comparison, silicon monoxide SiO (comparison active material r1) used as the comparison example of the embodiment 1 is used as a negative active material for comparison. These negative active materials "a" and r1 are mixed with graphite as a conductive agent and with cross-linked type acrylic acid resin and the like as a binder at a mixture rate of weight ratio of 45 : 40 : 15 respectively, to produce negative electrode mixtures, and next these negative electrode mixtures are pressed to form into pellets having a diameter of 15 mm with a thickness of 0.14 mm by adding 2 tonne/cm², and thereafter the resultants depressurised and thermal-dried for 10 hours at 200°C to produce a negative electrode.

The positive electrode 15 is produced as follows. Lithium hydroxide LiOH · H₂O, cobalt carbonate CoCO₃ and boron oxide B₂O₃ are weighed for a mol ratio of Li : Co : B of 1 : 0.9 : 0.1, and fully mixed in a mortar, thereafter the mixture obtained is heated and baked for 12 hours at a temperature of 850°C in air, and after cooled, the resultant is ground to form into a particle diameter equal to or less than 53 µm. The heating and grinding are repeated two times to synthesise the positive active material LiCo_{0.9}B_{0.1}O₂ of the present embodiment.

This product is used as a positive active material, and added with graphite as a conductive agent and fluororesin and the like as a binder at a weight ratio of 80 : 15 : 5 to be mixed and to produce a positive electrode mixture, and next, this positive electrode mixture is formed into a pellet having a diameter of 16.2 mm with a thickness of 0.70 mm by compression at 2 tonne/cm² and thereafter depressurised and thermal-dried for 10 hours at 100°C to produce a positive electrode.

Thus produced batteries (these correspond to negative active materials "a" and r1 respectively used and are made as batteries G and S) remain aged in one week at a room temperature and then are subjected to a charge and discharge test as mentioned below.

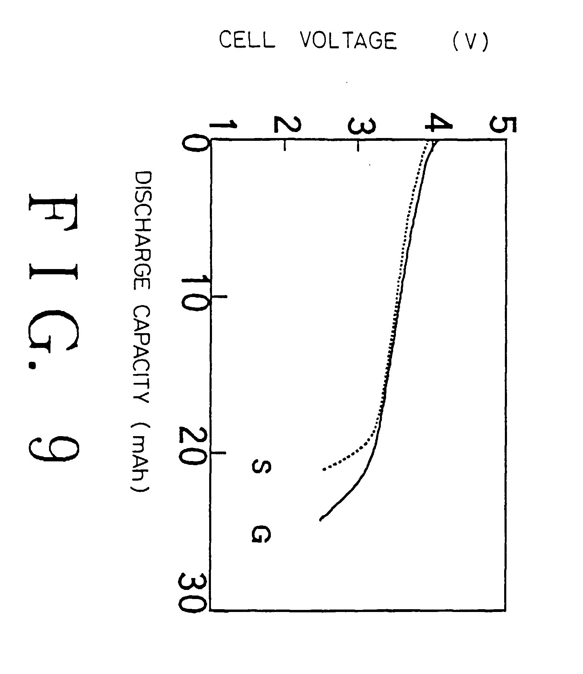

A discharge characteristic on second cycle when performing charge and discharge cycle for the batteries G and S under the condition of a constant current of 1 mA, a final charge voltage 4.2 V, and a final discharge voltage 2.5 V, is shown in figure 9. The charge and discharge cycle starts from charge.

In the battery G, lithium ions are released into the electrolyte solution from the positive active material LiCo_{0.9}B_{0.1}O₂ by charging, the resulted lithium ions are moved in the electrolyte solution to electrode-react with the negative active material, the lithium ions are electrochemically incorporated into the negative active material to produce composite oxide LiₓSi_{0.9}W_{0.1}O_{1.1} of silicon and an element M (tungsten W) containing lithium.

Subsequently, on discharging, lithium ions are released into the electrolyte solution from the composite oxide of silicon and the element M containing lithium to move in the electrolyte solution and to be incorporated into the positive active material, thereby the charge and discharge is stably repeated. The negative active material, after producing the composite oxide LiₓSi_{0.9}W_{0.1}O_{1.1} containing lithium by the first charge, forms composite oxide LiₓSi_{0.9}W_{0.1}O_{1.1} of silicon and the element M containing lithium on thereafter discharge - charge cycle other than when completely discharged.

As is apparent from figure 9, it is found that the battery G according to the invention has a larger discharge capacity and higher operating voltage compared to the comparison battery S, this therefore provides an upgraded charge and discharge characteristic. Also, it was found that, when this charge and discharge was performed up to 20 cycles, then in the comparison battery S, the discharge capacity was lowered to about 90% of an initial capacity, while in the battery G, the capacity was hardly lowered, a cycle service life was considerably improved.

In the embodiments, only the cases of lithium - aluminum alloy and LiₓCo_{0.9}B_{0.1}O₂ are shown as a counter electrode. However, it is understood that the present invention is not limited to the embodiments. As described above, it is possible to use a negative electrode using the negative active material according to the invention in combination with a positive counter electrode utilising as an active material the materials capable of incorporating and releasing lithium cation and/or anion; e.g. metal chalcogenides such as TiS₂, MoS₂, and NbSe₃, for example; metal oxides such as MnO₂, MoO₃, V₂O₅, LiₓCoO₂ (x>0), LiₓNiO₂ (x>0), and LiₓMn₂O₄ (x >0) for example; conductive polymers such as polyanilin, polypyrrole, polyparaphenylene, and polyacene for example; and graphite intercalation compounds and the like.

Thus the present invention provides negative active material for use in a non-aqueous electrolyte secondary battery, the material having the composition formula LiₓSi_{1-y} M_{y}O_{z} (where 0 ≦ x, 0 < y < 1, and 0 < z < 2) and M is an oxide-forming element other than Li or Si and may for example be a metal or a metalloid. In the base potential region of 0 to 1 V relative to a standard lithium electrode (metal lithium), the capacity for reversibly incorporating and releasing lithium ions by charge and discharge, i.e. the charge and discharge capacity, is considerably enhanced together with smaller polarisation during the charge and discharge. Accordingly this material can be used in a secondary battery having an upgraded high-current charge and discharge characteristic with a high voltage and high energy density. In addition, an extremely stable secondary battery with a service life of many cycles can be produced almost free of deterioration by mechanisms such as the generation of irreversible substances due to over charging and over discharging.

The aforegoing description has been given by way of example only and it will be appreciated by a person skilled in the art that modifications can be made without departing from the scope of the present invention.

## Claims

1. A non-aqueous electrolyte secondary battery comprising at least a negative electrode (13), a positive electrode (15), and a non-aqueous electrolyte with lithium ion conductivity, wherein a composite oxide of formula LiₓSi_{1-y}M_{y}O_{z} is used as an active material of said negative electrode, wherein M is one or more oxide-forming elements selected from the group consisting of:
(i) metal elements other than alkali metals,
(ii) metalloids and non-metals other than silicon, and
(iii) boron, carbon and phosphorous,
and wherein x, y and z satisfy 0 ≦ x, 0 < y < 1 and 0 < z < 2.

2. A non-aqueous electrolyte secondary battery as claimed in claim 1, wherein 0 < z ≦ 1.5.

3. A non-aqueous electrolyte secondary cell as claimed in claim 1 or claim 2, wherein 0 <y < 0.75.

4. A non-aqueous electrolyte secondary cell as claimed in any of claims 1 to 3, wherein M represents one or more elements selected from the group consisting of transition metal elements, and metal and metalloid elements of group 13 and group 14 in the IUPAC Periodic Table.

5. A non-aqueous electrolyte secondary battery as claimed in claim 4, wherein M represents one or more elements selected from the group consisting of titanium (Ti), tungsten (W), manganese (Mn), iron (Fe), nickel (Ni), boron (B), tin (Sn) and lead (Pb).

6. A non-aqueous electrolyte secondary battery as claimed in any of claims 1 to 5, wherein a composite oxide having a layer-like structure and the formula LiₐT_{b}L_{c}O₂ is used as an active material of said positive electrode (3), T is one or more transition metal elements, L is one or more metalloid elements, selected from boron B and silicon Si, and a, b and c satisfy 0 < a ≦ 1.15, 0.85 ≦ b+c ≦ 1.3, and 0 ≦ c respectively.

7. A non-aqueous electrolyte secondary battery as claimed in any of claims 1 to 6, wherein a non-aqueous electrolyte solution comprising at least a non-aqueous solvent containing ethylene carbonate and a supporting electrolyte containing lithium ions is used as said non-aqueous electrolyte.

8. A non-aqueous electrolyte secondary battery as claimed in claim 7, wherein said non-aqueous electrolyte solution also contains an R R' type alkyl carbonate represented by the formula: 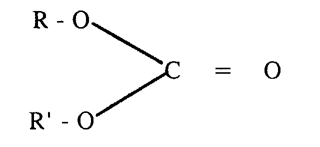 wherein R and R' (which may be the same or different) are alkyl groups.

9. A non-aqueous electrolyte secondary battery as claimed in claim 8, wherein said R · R' type alkyl carbonate is dimethyl carbonate, diethyl carbonate or methyl-ethyl carbonate.

10. A method for producing a non-aqueous electrolyte secondary battery, wherein inside the battery after assembling the battery, or inside or outside the battery during production of the battery, a composite oxide represented by formula Si_{1-y}M_{y}O_{z} is electrochemically reacted with lithium or a material containing lithium to incorporate lithium ions into the composite oxide Si_{1-y}M_{y}O_{z} and to produce a composite oxide of formula LiₓSi_{1-y}M_{y}O_{z}, which functions as an active material of a negative electrode (5) of the battery, wherein M is one or more oxide-forming elements selected from the group consisting of:
(i) metal elements other than alkali metals,
(ii) metalloids and non-metals other than silicon, and
(iii) boron, carbon and phosphorous,
and wherein x, y and z satisfy 0 < x, 0 < y < 1 and 0 < z < 2.

11. A method according to claim 10 wherein 0 < z < 1.5

12. A method according to claim 10 or 11 wherein 0 < y < 0.75.

13. A method according to claim 10, 11 or 12 wherein M represents one or more elements selected from the group consisting of transition metal elements, and metal and metalloid elements of group 13 and group 14 in the IUPAC Periodic Table.

14. A method according to claim 10, 11, 12 or 13 wherein M represents one or more elements selected from the group consisting of titanium (Ti), tungsten (W), manganese (Mn), iron (Fe), nickel (Ni), boron (B), tin (Sn) and lead (Pb).

## Patentansprüche

1. Sekundärbatterie mit nichtwäßrigem Elektrolyt, umfassend wenigstens eine negative Elektrode (13), eine positive Elektrode (15) und einen nichtwäßrigen Elektrolyt mit Lithiumionenleitfähigkeit, wobei ein Mischoxid der Formel LiₓSi_{1-y}M_{y}O_{z} als ein aktives Material der negativen Elektrode verwendet ist, und wobei M ein oder mehrere oxidbildende Elemente darstellt, ausgewählt aus der Gruppe bestehend aus:
(i) von Alkalimetalle verschiedene Metallelemente,
(ii) von Silicium verschiedene Halbmetalle und Nichtmetalle, und
(iii) Bor, Kohlenstoff und Phosphor,
und wobei x, y und z O ≤ x, O < y < 1 und 0 < z < 2 erfüllen.

2. Sekundärbatterie mit nichtwäßrigem Elektrolyt nach Anspruch 1, wobei 0 < z ≤ 1,5 ist.

3. Sekundärzelle mit nichtwäßrigem Elektrolyt nach Anspruch 1 oder 2, wobei 0 < y < 0,75 ist.

4. Sekundärzelle mit nichtwäßrigem Elektrolyt nach einem der Ansprüche 1 bis 3, wobei M ein oder mehrere Elemente darstellt, ausgewählt aus der Gruppe, bestehend aus Übergangsmetallelementen und Metall- und Halbmetallelementen der Gruppe 13 und Gruppe 14 im IUPAC-Periodensystem.

5. Sekundärbatterie mit nichtwäßrigem Elektrolyt nach Anspruch 4, wobei M ein oder mehrere Elemente darstellt, ausgewählt aus der Gruppe bestehend aus Titan (Ti), Wolfram (W), Mangan (Mn), Eisen (Fe), Nickel (Ni), Bor (B), Zinn (Sn) und Blei (Pb).

6. Sekundärbatterie mit nichtwäßrigem Elektrolyt nach einem der Ansprüche 1 bis 5, wobei ein Mischoxid mit lagenartiger Struktur und der Formel LiₐT_{b}L_{c}O₂ als ein aktives Material der positiven Elektrode (3) verwendet ist, T ein oder mehrere Übergangsmetallelemente darstellt, L ein oder mehrere Halbmetallelemente darstellt, die aus Bor B und Silicium Si gewählt sind, und wobei a, b und c 0 < a ≤ 1,15, 0,85 ≤ b + c ≤ 1,3 bzw. 0 ≤ c erfüllen.

7. Sekundärbatterie mit nichtwäßrigem Elektrolyt nach einem der Ansprüche 1 bis 6, wobei eine nichtwäßrige Elektrolytlösung , die wenigstens ein Ethylencarbonat enthaltendes nichtwäßriges Lösungsmittel und einen Lithiumionen enthaltenden Leitelektrolyt umfaßt, als nichtwäßriger Elektrolyt verwendet ist.

8. Sekundärbatterie mit nichtwäßrigem Elektrolyt nach Anspruch 7, wobei die nichtwäßrige Elektrolytlösung ferner ein Alkylcarbonat des R · R'-Typs enthält, welches durch die Formel: 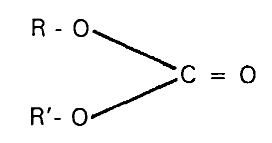 dargestellt wird, wobei R und R' (welche gleich oder verschieden sein können) Alkylgruppen sind.

9. Sekundärbatterie mit nichtwäßrigem Elektrolyt nach Anspruch 8, wobei das Alkylcarbonat des R R'-Typs Dimethylcarbonat, Diethylcarbonat oder Methylethylcarbonat ist.

10. Verfahren zur Herstellung einer Sekundärbatterie mit nichtwäßrigem Elektrolyt, wobei nach dem Zusammenbau der Batterie in der Batterie, oder während der Herstellung der Batterie innerhalb oder außerhalb der Batterie ein durch die Formel Si_{1-y}M_{y}O_{z} dargestelltes Mischoxid elektrochemisch mit Lithium oder einem Lithium enthaltenden Material umgesetzt wird, um Lithiumionen in das Mischoxid Si_{1-y}M_{y}O_{z} einzubauen und ein Mischoxid der Formel LiₓSi_{1-y}M_{y}O_{z} zu bilden, welches als ein aktives Material einer negativen Elektrode (5) der Batterie wirkt, wobei M ein oder mehrere oxidbildende Elemente darstellt, ausgewählt aus der Gruppe bestehend aus:
(i) von Alkalimetallen verschiedene Metallelemente,
(ii) von Silicium verschiedene Halbmetalle und Nichtmetalle, und
(iii) Bor, Kohlenstoff und Phosphor,
und wobei x, y und z 0 < x, 0 < y < 1 und 0 < z < 2 erfüllen.

11. Verfahren nach Anspruch 10, wobei 0 < z ≤ 1,5 ist.

12. Verfahren nach Anspruch 10 oder 11, wobei 0 < y < 0,75 ist.

13. Verfahren nach Anspruch 10, 11 oder 12, wobei M ein oder mehrere Elemente darstellt, ausgewählt aus der Gruppe bestehend aus Übergangsmetallelementen und Metall- und Halbmetallelementen der Gruppe 13 und Gruppe 14 im IUPAC-Periodensystem.

14. Verfahren nach Anspruch 10, 11, 12 oder 13, wobei M ein oder mehrere Elemente darstellt, ausgewählt aus der Gruppe bestehend aus Titan (Ti), Wolfram (W), Mangan (Mn), Eisen (Fe), Nickel (Ni), Bor (B), Zinn (Sn) und Blei (Pb).

## Revendications

1. Accumulateur à électrolyte non aqueux comprenant au moins une électrode (13) négative, une électrode (15) positive et un électrolyte non aqueux à conductibilité par des ions lithium, un oxyde composite de formule LiₓSi_{1-y}M_{y}O_{z} étant utilisé comme matière active de l'électrode négative, M étant un élément formant un oxyde ou plusieurs éléments formant un oxyde choisi dans le groupe consistant :
(i) en des éléments métalliques autres que des métaux alcalins,
(ii) en des métalloïdes et des non métaux autres que le silicium,
(iii) en le bore, le carbone et le phosphore,
et dans laquelle x,y, et z satisfont à 0 ≦ x, 0 < y < 1 et 0 < z < 2

2. Accumulateur à électrolyte non aqueux suivant la revendication 1, dans lequel 0 < z ≦ 1,5.

3. Accumulateur à électrolyte non aqueux suivant la revendication 1 ou 2, dans lequel 0 < y < 0,75.

4. Accumulateur à électrolyte non aqueux suivant l'une quelconque des revendications 1 à 3 dans lequel M représente un élément ou plusieurs éléments choisi dans le groupe consistant en des éléments de métaux de transition et en des éléments métalliques et métalloïdes du groupe 13 et du groupe 14 de la classification périodique des éléments IUPAC.

5. Accumulateur à électrolyte non aqueux suivant la revendication 4 dans lequel M représente un élément ou plusieurs éléments choisi dans le groupe consistant en le titane (Ti) , le tungstène (W), le manganèse (Mn), le fer (Fe), le nickel (Ni), le bore (B), l'étain (Sn) et le plomb (Pb).

6. Accumulateur à électrolyte non aqueux suivant la revendication 1 ou 5, dans lequel un oxyde composite à structure feuilletée et de formule LiₐT_{b}L_{c}O₂ est utilisé comme matière active de l'électrode (3) positive, T est un élément de métaux de transition ou plusieurs éléments de métaux de transition, L est un élément métalloïde ou plusieurs éléments métalloïdes choisi parmi le bore B et le silicium Si, et a, b et c satisfont 0 < a ≦ 1.15, 0.85 ≦b+c ≦ 1.3, et 0 ≦ c respectivement.

7. Accumulateur à électrolyte non aqueux suivant l'une quelconque des revendications 1 à 6, dans lequel une solution non aqueuse d'électrolyte comprend au moins un solvant non aqueux renfermant du carbonate d'éthylène et un électrolyte de support contenant des ions lithium est utilisé comme électrolyte non aqueux.

8. Accumulateur à électrolyte non aqueux suivant la revendication 7, dans lequel la solution non aqueuse d'électrolyte contient également un carbonate d'alcoyle de type R R' représenté par la formule 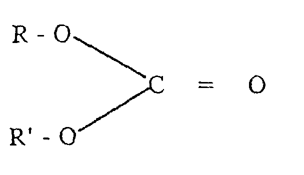 dans laquelle R R' (qui peuvent être identiques ou différents) sont des groupes alcoyles.

9. Accumulateur à électrolyte non aqueux suivant la revendication 8, dans lequel le carbonate d'alcoyle de type R R' est le carbonate de diméthyle, le carbonate de diéthyle ou le carbonate de méthyle et d'éthyle.

10. Procédé de fabrication d'un accumulateur à électrolyte non aqueux, dans lequel on fait réagir, à l'intérieur de l'accumulateur après l'avoir monté ou à l'intérieur ou à l'extérieur de l'accumulateur pendant sa production, un oxyde composite représenté par la formule Si_{1-y}M_{y}O_{z} électrochimiquement sur du lithium ou sur une substance contenant du lithium pour incorporer des ions lithium à l'oxyde composite Si_{1-y}M_{y}O_{z} et pour produire un oxyde composite de formule LiₓSi_{1-y}M_{y}O_{z} qui sert de matière active d'une électrode (5) négative de l'accumulateur, M étant un élément formant un oxyde ou plusieurs éléments formant un oxyde choisi dans le groupe consistant :
((i) en des éléments métalliques autres que des métaux alcalins,
(ii) en des métalloïdes et des non métaux autres que le silicium,
(iii) en le bore, le carbone et le phosphore,
et dans laquelle x, y, et z satisfont à 0 < x, 0 < y < 1 et 0 < z < 2

11. Procédé suivant la revendication 10, dans lequel 0 < z ≦ 1.5.

12. Procédé suivant la revendication 10 ou 11, dans lequel 0 < y < 0.75.

13. Procédé suivant la revendication 10, 11 ou 12, dans lequel M représente un élément ou plusieurs éléments choisi dans le groupe consistant en des éléments de métaux de transition et en des éléments métalliques et métalloïdes du groupe 13 et du groupe 14 de la classification périodique des éléments IUPAC.

14. Procédé suivant la revendication 10, 11, 12, ou 13 dans lequel M représente un ou plusieurs éléments choisi dans le groupe consistant en le titane (Ti) , le tungstène (W), le manganèse (Mn), le fer (Fe), le nickel (Ni), le bore (B), l'étain (Sn) et le plomb (Pb).
